# EUROPÄISCHE PATENTSCHRIFT

(11) **EP 3 390 814 B1**
(45) Veröffentlichungstag und Bekanntmachung des Hinweises auf die Patenterteilung: **13.04.2022**
(21) Anmeldenummer: 16812945.0
(22) Anmeldetag: 15.12.2016
(51) Int. Cl.: F03D 7/02, G01S 19/14, G01S 19/53

(54) **VERFAHREN ZUM BESTIMMEN EINES AZIMUTWINKELS EINER WINDENERGIEANLAGE**
METHOD FOR DETERMINING AN AZIMUTH ANGLE OF A WIND TURBINE
PROCÉDÉ DE DÉTERMINATION D'UN ANGLE AZIMUTAL D'UNE ÉOLIENNE

(30) Priorität: 17.12.2015 DE 102015122126
(43) Veröffentlichungstag der Anmeldung: 24.10.2018
(73) Patentinhaber: Wobben Properties GmbH, 26607 Aurich (DE)
(72) Erfinder: WEBER, Marcel, 26607 Aurich (DE); JANDL, Marc, 55129 Mainz (DE)
(74) Vertreter: Eisenführ Speiser
(86) Internationale Anmeldenummer: PCT/EP2016/081259
(87) Internationale Veröffentlichungsnummer: WO 2017/102986

(56) Entgegenhaltungen:
- EP-A2- 2 063 112
- EP-A2- 2 067 913
- EP-A2- 2 202 407
- EP-A2- 2 333 316
- DE-A1-102012 108 573
- JP-A- 2004 285 857

## Beschreibung

Die Erfindung betrifft ein Verfahren zum Bestimmen eines Azimutwinkels einer Windenergieanlage. Ferner betrifft die Erfindung eine Windenergieanlage mit einem Turm, einer Gondel und einem Rotor.

Bei Windenergieanlagen, insbesondere bei deren Installation und Inbetriebnahme sowie bei der Ausmessung von Prototypenkonstellationen, ist die Ermittlung des Azimutwinkels der Windenergieanlage von Bedeutung. Der Azimutwinkel einer Windenergieanlage wird auch als "Anlagenblickrichtung" bezeichnet und gibt in Grad- oder Winkelangabe die Himmelsrichtung an, in die die Rotornabe oder ein Spinner der Windenergieanlage zeigt. Zur Bestimmung des Azimutwinkels wird bei Inbetriebnahme der Windenergieanlage in der Regel die Windenergieanlage, meist die Rotornabe oder der Spinner, aus einiger Entfernung über eine Kompasspeilung angepeilt und daraus der Azimutwinkel abgeleitet.

Das Deutsche Patent- und Markenamt hat in der Prioritätsanmeldung zu vorliegender Anmeldung folgenden Stand der Technik recherchiert: DE 20 2007 008 066 U1, EP 2 333 316 A2 und KR 10 2014 0 054 680 A. Die EP 2 333 316 A2 beschreibt einen GPS-Empfänger zum Bestimmen eines Azimutwinkels. Aus der EP 2 202 407 A2 ist eine Windenergieanlage bekannt, die einen Sensor zum Anzeigen einer Gierrichtung umfasst.
geänderte Beschreibungsseiten (Reinschrift)

Die EP 2 063 112 A2 offenbart eine Windturbine mit einem Empfänger, zum Empfangen eines Signals von einem satellitengestützten Navigationssystem und zum Bestimmen von Positions-, Zeit- und Datumsinformation, und mit einer Kommunikationsvorrichtung, die ausgebildet ist die Positions-, Zeit- und Datumsinformation zu übertragen. Die JP 2004 285 857 A zeigt ein Laseranemometer, um einen Neigungswinkel eines Blattes und einen Gierwinkel zu steuern.

Es ist eine Aufgabe der vorliegenden Erfindung, die Genauigkeit bei der Ermittlung des Azimutwinkels zu verbessern.

Gemäß einem ersten Aspekt der Erfindung wird diese Aufgabe gelöst durch ein Verfahren nach Anspruch 1.

Die Erfindung beruht unter anderem auf der Erkenntnis, dass die Genauigkeit bei der Bestimmung des Azimutwinkels einer Windenergieanlage dadurch erhöht werden kann, dass das Verfahren zum Bestimmen des Azimutwinkels von der Windenergieanlage aus, insbesondere von der Gondel aus, durchgeführt wird und nicht, wie herkömmlich, die Windenergieanlage von der Ferne aus angepeilt wird. Dies gilt im Übrigen auch für die Lösung gemäß dem zweiten Aspekt, wie weiter unten beschrieben. Durch das Anbringen von mindestens zwei GNSS-Empfängern oder, wie weiter unten beschrieben, eines Zielfernrohrs an der Gondel der Windenergieanlage und das Bestimmen des Azimutwinkels auf Basis von Empfangssignalen der GNSS-Empfänger beziehungsweise einer mittels des Zielfernrohrs durchgeführten Peilung kann die Genauigkeit erhöht werden, da die Positionen der GNSS-Empfänger beziehungsweise des Zielfernrohrs an der Gondel der Windenergieanlage bekannt sind. Mit den erfindungsgemäßen Verfahren kann eine genauere Bestimmung des Azimutwinkels nicht nur bei der Installation und Inbetriebnahme und beispielsweise bei der Ausmessung von Prototypenkonstellationen durchgeführt werden, sondern beispielsweise auch bei bestehenden Windenergieanlagen zur Korrektur oder Nachjustierung des Azimutwinkels eingesetzt werden.

Eine genaue Bestimmung des Azimutwinkels der Windenergieanlage ist insbesondere bei der Optimierung von Leistungskurven von Prototypen von Bedeutung. Die Windrichtungskorrekturkennlinien werden so ausgelegt, dass die "Anlagenblickrichtung" möglichst direkt in den Wind zeigt, da bei einer schiefen Anströmung der Windenergieanlage dem Wind weniger Leistung entnommen würde. Daten zu Windeigenschaften werden bei einer Windenergieanlage üblicherweise auf einem Windmesstraggestell, der an der Gondel angeordnet ist, ermittelt und zwar meist zu Windgeschwindigkeit und/oder Windrichtung über Anemometer und Anemoskope. Damit insbesondere der Windrichtungsgeber beziehungsweise das Anemoskop keine falschen Daten über die Windrichtung liefert, wird der Windrichtungsgeber beziehungsweise das Anemoskop meist auf der Gondel so ausgerichtet, dass der Windrichtungsgeber exakt in Anlagenblickrichtung zeigt, das heißt die Anlagenblickrichtung der Windenergieanlage direkt in den Wind zeigt. Dies gilt jedoch nur, wenn der Rotor der Windenergieanlage nicht dreht. Beim Betrieb der Windenergieanlage führt die durch die Rotorblätter in Drall versetzte Luftströmung dazu, dass es zu einer Beeinflussung der Strömung vor den Windrichtungsgeber beziehungsweise Anemoskop kommt und daher vom Windrichtungsgeber beziehungsweise Anemoskop nicht die reale Windrichtung gemessen wird. Die Stärke dieser Beeinflussung ist unter anderem abhängig von der gefahrenen Schnelllaufzahl. Um diese Beeinflussung auszugleichen, wird bei der Optimierung der Leistungskurve, in der Regel an Prototypen, eine Korrekturfunktion ermittelt, welche die Windenergieanlage wieder direkt in den Wind orientiert. Hierbei dient die am Windmessmast ermittelte Windrichtung als Referenz. Die Differenz der Referenzwindrichtung und der Anlagenblickrichtung (Azimutwinkel) ergeben die Werte der Korrekturfunktion. Diese Windrichtungskorrekturfunktion wird in der Windenergieanlagensteuerung hinterlegt und ist eine Funktion der Schnelllaufzahl. Ziel der Windrichtungskorrekturfunktion ist es, die Leistungskurve und den Ertrag in Kilowattstunden für die gesamte Serie der Windenergieanlagen zu optimieren. Die Ermittlung der Windrichtungskorrekturfunktion erfolgt in der Regel in der Erprobungsphase von Prototypen von Windenergieanlagen. Zur Bestimmung der Windrichtungskorrekturfunktion müssen die Referenzwindrichtung, die am Windmessmast gemessen wird, und der Azimutwinkel beide möglichst genau sein. Insbesondere der Azimutwinkel, also die Anlagenblickrichtung der Windenergieanlage, muss möglich genau der realen Ausrichtung der Windenergieanlage entsprechen. Eine Erhöhung der Genauigkeit des Azimutwinkels der Windenergieanlage kann zur Verbesserung der Windrichtungskorrekturfunktion beitragen und damit auch die Windausbeute erhöhen, indem die Ausrichtung der Windenergieanlage zum Wind verbessert werden kann. Die Windrichtungskorrekturfunktion wird später in die Seriensteuerung der Windenergieanlagen einer Serie implementiert.

Bei Windenergieanlagenherstellern werden oft Windmessgeräte eingesetzt, die eine Kombination aus Anemometer und Anemoskop sind, die oft aber verkürzt als Anemometer bezeichnet werden (obwohl sie auch die Funktion eines Anemoskops besitzen).

Auch unabhängig von der Windrichtungskorrekturfunktion hat die exakte Bestimmung des Azimutwinkels der Windenergieanlage große Bedeutung, beispielsweise bei der sektoriellen Abregelung der Windenergieanlage. Beispielsweise kann je nach Sektor die Windenergieanlage mit unterschiedlichen Betriebsparametern gefahren werden. Wenn der Wind aus einem bestimmten Sektor weht, kann die Windenergieanlage beispielsweise schallreduziert betrieben werden, um Anwohner zu schützen. Ferner können in einem Windpark die stromaufwärts positionierten Windenergieanlagen je nach Windrichtung gedrosselt laufen, wodurch vor allem die Turbulenz und damit die Anlagenbelastung verringert werden, um die stromabwärts positionierten Windenergieanlagen "weniger Turbulenzen sehen zu lassen". Eine genauere Ermittlung des Azimutwinkels bringt somit verschiedene Vorteile mit sich.

Die Abkürzung GNSS steht für Global Navigation Satellite System oder globales Navigationssatellitensystem und ist ein Sammelbegriff für die Verwendung bestehender und künftiger globaler Satellitensysteme wie GPS (Global Positioning System), GLONASS (Global Navigation Satellite System), Galileo oder Beidou oder sowie verschiedene (satellitengestützte) Ergänzungs- oder Zusatzsysteme, welche die Positionsgenauigkeit verbessern, wie beispielsweise DGPS (Differential Global Positioning System), RTK GPS (Real Time Kinematics Global Positioning System) oder Satellite Based Augmentation Systems (SBAS). Hierin werden auch regionale Navigationssatellitensysteme (Regional Navigation Satellite Systems, RNSS) als mit von dem Begriff GNSS umfasst verstanden. Insbesondere mittels Systemen wie DGPS/RTK GPS kann die relative Position zwischen zwei Empfängern mittlerweile auf wenige Zentimeter genau bestimmt werden.

Durch das Vergleichen der Empfangssignale der mindestens zwei GNSS-Empfänger kann aus dem Vergleichsergebnis der Azimutwinkel der Windenergieanlage abgeleitet werden. Insbesondere ist es bevorzugt, dass die beiden GNSS-Empfänger in einem bekannten, vorbestimmten Abstand zueinander an der Gondel angebracht sind, wobei ein Abstand von mehr als 20 cm, insbesondere von mehr als 50 cm, vorzugsweise von mindestens 1 oder 2 m bevorzugt ist.

Die Empfangssignale der mindestens zwei GNSS-Empfänger liefern genaue Daten über die jeweilige Position der mindestens zwei GNSS-Empfänger. Aus den beiden unterschiedlichen Empfangssignalen kann der Winkel zwischen den beiden Positionen der GNSS-Empfänger uns somit der Azimutwinkel der Windenergieanlage bestimmt werden.

Vorzugsweise können auch drei oder mehr GNSS-Empfänger vorgesehen sein, welche die Zuverlässigkeit und/oder Messgenauigkeit des Verfahrens erhöhen können. Die mindestens zwei, drei oder mehreren GNSS-Empfänger werden vorzugsweise temporär und/oder lösbar an der Gondel montiert, können alternativ jedoch auch permanent und/oder nicht lösbar an der Gondel montiert sein. Die mindestens zwei GNSS-Empfänger können als einzelne Elemente separat voneinander an der Gondel der Windenergieanlage angebracht sein.

Der Vergleich der Empfangssignale und das Ableiten des Azimutwinkels aus dem Vergleichsergebnis können beispielsweise wie folgt erfolgen. Aus dem Abstand der beiden Empfänger zueinander und der Phasenverschiebung der unterschiedlichen Empfangssignale kann der Winkel der Empfänger-Verbindungsachse zum Satelliten bestimmt werden. Über die Ephemeriden des Satelliten kann damit auch die Ausrichtung der Verbindungsachse zwischen den GNSS-Empfängern zur Nordrichtung bestimmt werden. Über die bekannte Anordnung der GNSS-Empfänger auf der Gondel der Windenergieanlage und damit über die bekannte Lage der Verbindungsachse zwischen den GNSS-Empfängern auf der Windenergieanlage kann somit auch der Azimutwinkel der Windenergieanlage bestimmt werden. Auf diese Weise können Messgenauigkeiten im Bereich von Zehntel bis Hundertstel Grad erreicht werden. Bevorzugt ist, dass mit dem Verfahren Abweichungen vom realen Azimutwinkel von maximal +/-2° auftreten, vorzugsweise von maximal +/-1°.

Vorzugsweise sind die beiden GNSS-Empfänger so auf der Gondel ausgerichtet, dass die Verbindungsachse der beiden GNSS-Empfänger parallel zur oder identisch mit der Anlagenblickrichtung ausgerichtet ist.

Vorzugsweise werden die mindestens zwei GNSS-Empfänger an dem Windmesstraggestell, insbesondere dem Windmessgerät, mittels einer Halterung angebracht. Ferner ist bevorzugt, dass die Halterung ausgebildet ist, eine Ausrichtevorrichtung, insbesondere ein Lasergerät, für die Ausrichtung des Windmesstraggestells, insbesondere des Windmessgeräts, lösbar aufzunehmen. Es ist auch bevorzugt, dass die mindestens zwei GNSS-Empfänger nach dem Bestimmen des Azimutwinkels demontiert werden.

Gemäß einer bevorzugten Fortbildung ist vorgesehen, dass die mindestens zwei GNSS-Empfänger Teil einer an der Gondel angebrachten Positionsermittlungsvorrichtung, insbesondere eines GNSS-Kompass, sind. Bevorzugt ist es, wenn die mindestens zwei GNSS-Empfänger baulich in einer Positionsermittlungsvorrichtung integriert sind und als Teil dieser Positionsermittlungsvorrichtung an der Gondel angebracht sind.

Die Positionsermittlungsvorrichtung kann beispielsweise als ein Balken, vorzugsweise als ein teleskopierbarer Balken ausgebildet sein. Die mindestens zwei GNSS-Empfänger können vorzugsweise an den beiden Enden des Balkens angeordnet sein.

Vorzugsweise ist die Positionsermittlungsvorrichtung jedoch als GNSS-Kompass ausgebildet, der auch als GPS-Kompass oder Satelliten-Kompass bezeichnet wird. Als ein GNSS-Kompass wird insbesondere ein Gerät bezeichnet, welches mindestens zwei GNSS-Empfänger umfasst, welche Empfangssignale empfangen können und aus diesen eine Ausrichtung der Empfängerverbindungsachse oder einer anderen Referenzachse des GNSS-Kompass bestimmen können, insbesondere eine Ausrichtung gegen die Nordrichtung.

Insbesondere ist es bevorzugt, dass das Vergleichen der Empfangssignale der GNSS-Empfänger in der Positionsermittlungsvorrichtung, insbesondere im GNSS-Kompass, ausgeführt wird. Ferner ist bevorzugt, dass das Ableiten des Azimutwinkels in der Positionsermittlungsvorrichtung, insbesondere im GNSS-Kompass, ausgeführt wird. Ein GNSS-Kompass kann eine Auswerteeinheit umfassen und/oder mit einer solchen (kabelgebunden und/oder kabellos) verbindbar sein.

Die Integration der mindestens zwei GNSS-Empfänger in einer Positionsermittlungsvorrichtung, insbesondere in einem GNSS-Kompass, sowie vorzugsweise auch das Vergleichen der Empfangssignale der GNSS-Empfänger und/oder das Ableiten des Azimutwinkels in der Positionsermittlungsvorrichtung, insbesondere im GNSS-Kompass, hat den Vorteil, dass lediglich eine einzelne, integrale Baueinheit an der Gondel der Windenergieanlage angebracht werden muss, welche gegebenenfalls (signaltechnisch) angebunden beziehungsweise ausgelesen werden muss. Gegenüber einer einzelnen Anbringung von mindestens zwei, gegebenenfalls drei oder mehreren, GNSS-Empfängern erleichtert und vereinfacht die Integration der GNSS-Empfänger in einer Positionsermittlungsvorrichtung somit das Verfahren und gegebenenfalls die Auswertung der Signale deutlich. Auch die Zuverlässigkeit des Verfahrens kann auf diese Weise erhöht und die und Fehleranfälligkeit reduziert werden. Ferner kann auch beispielsweise eine Veränderung oder Verbesserung der Algorithmen oder Berechnungsschritte zur Ableitung des Azimutwinkels in der Positionsermittlungsvorrichtung bei Bedarf durch ein zentrales Softwareupdate in der Positionsermittlungsvorrichtung einfach und zuverlässig durchgeführt werden.

Gemäß einem zweiten Aspekt wird ferner beschrieben ein Verfahren zum Bestimmen eines Azimutwinkels einer Windenergieanlage, mit den Schritten Anbringen eines Zielfernrohrs an einer Gondel der Windenergieanlage, Anpeilen eines Peilobjekts mit dem Zielfernrohr in einem Peilwinkel, Ableiten des Azimutwinkels aus einem Abgleich des Peilwinkels mit realen Koordinaten des Peilobjekts und/oder der Windenergieanlage, insbesondere des Zielfernrohrs. Ferner ist vorgesehen, dass das Zielfernrohr an einem Windmesstraggestell, insbesondere einem Windmessgerät, angebracht wird.

Diese Variante des Verfahrens beruht, wie oben dargestellt, ebenfalls auf der Erkenntnis, dass die Genauigkeit dadurch erhöht werden kann, dass das Verfahren von der Windenergieanlage aus, insbesondere von der Gondel aus, durchgeführt wird. Bei dieser Variante des Verfahrens wird ein Zielfernrohr vorzugsweise temporär und/oder lösbar an der Gondel montiert und mit dem Zielfernrohr ein Peilobjekt angepeilt. Vorzugsweise sind die realen Koordinaten des Peilobjekts bekannt oder wurden zuvor eingemessen oder anderweitig ermittelt. DerWinkel, zwischen der Anlagenorientierung und der Verlängerung Zielfernrohr-Peilobjekt, ist der Peilwinkel. Aus diesem Peilwinkel und den realen Koordinaten des Peilobjekts sowie den realen Koordinaten der Windenergieanlage, also dem Standort der Windenergieanlage, insbesondere den realen Koordinaten des Zielfernrohrs, lässt sich der Azimutwinkel der Windenergieanlage ableiten. Der Peilwinkel zwischen der Geraden zwischen Windenergieanlage beziehungsweise der Position des Zielfernrohrs und dem Peilobjekt und der Nordachse kann beispielsweise mittels Vektorrechnung ermittelt werden. Wenn das Verfahren zur Korrektur eines Azimutwinkels einer Windenergieanlage eingesetzt werden soll, kann der Schritt des Ableitens des Azimutwinkels auch wie folgt durchgeführt und/oder modifiziert werden. Der Peilwinkel kann zum bestehenden, zu korrigierenden Azimutwinkel der Anlage addiert beziehungsweise subtrahiert werden und der sich daraus ergebende Winkel wird als Winkel A bezeichnet. Der sich aus den realen Koordinaten des Peilobjekts und der Windenergieanlage beziehungsweise des Zielfernrohrs ergebende beziehungsweise errechnete Winkel zwischen Anlagenorientierung und der Nordachse wird als Winkel B bezeichnet. Aus der Differenz dieser beiden Winkel A und B ergibt sich ein sogenannter Offset des Azimutwinkels der Windenergieanlage, um den der bestehende Azimutwinkel der Windenergieanlage zu korrigieren ist.

Gemäß einem dritten Aspekt der Erfindung wird die eingangs genannte Aufgabe gelöst durch ein Verfahren zum Bestimmen eines Azimutwinkels einer Windenergieanlage, mit den Schritten: Anbringen von einem GNSS-Empfänger an einer Gondel der Windenergieanlage, Drehen der Gondel der Windenergieanlage um ihre eigene Achse und Vergleichen der Empfangssignale des GNSS-Empfängers von unterschiedlichen Positionen der Drehung, Ableiten des Azimutwinkels aus dem Vergleichsergebnis. Ferner ist vorgesehen, dass der mindestens eine GNSS-Empfänger, an einem Windmesstraggestell, insbesondere einem Windmessgerät, angebracht wird

Auch diese Variante des Verfahrens beruht, wie die beiden ersten Aspekte, ebenfalls auf der Erkenntnis, dass die Genauigkeit dadurch erhöht werden kann, dass das Verfahren von der Windenergieanlage aus, insbesondere von der Gondel aus, durchgeführt wird. Bei dieser Variante des Verfahrens wird nur ein GNSS-Empfänger benötigt (es können jedoch auch zwei, drei oder mehrere eingesetzt werden). Zur Ermittlung des Azimutwinkels wird die Gondel mit dem daran, vorzugsweise an einer in Bezug auf die Mittelachse und den Drehpunkt bekannten und fixen Position, angebrachten GNSS-Empfänger gedreht, vorzugsweise um eine vertikale Achse und ferner vorzugsweise um volle 360 Grad. Während dieser Drehung der Gondel empfängt der GNSS-Empfänger vorzugsweise kontinuierlich, jedoch zumindest in Zeit- oder Winkelabständen, Empfangssignale, aus denen sich die Koordinaten ableiten lassen. Durch Vergleich dieser an unterschiedlichen Positionen der Drehung gewonnen Daten lässt sich der Azimutwinkel ermitteln.

Es ist insbesondere bevorzugt, dass der GNSS-Empfänger außerhalb des Drehpunktes der Gondel auf einer im Wesentlichen horizontalen Längsachse der Gondel angebracht ist und das Ableiten des Azimutwinkels das Ausrichten der Gondel nach der nördlichsten Koordinate derjenigen Koordinaten umfasst, die aus den der während der Drehung empfangenen Empfangssignalen des GNSS-Empfängers ermittelt wurden. Auf diese Weise kann eine besonders einfache Ausrichtung der Anlagenblickrichtung nach Norden erreicht werden.

Gemäß einer weiteren bevorzugten Fortbildungsform kann das Verfahren, insbesondere das Verfahren nach dem ersten und/oder dem zweiten und/oder dem dritten Aspekt, dadurch fortgebildet werden, dass der mindestens eine GNSS-Empfänger, vorzugsweise die mindestens zwei GNSS-Empfänger, insbesondere die Positionsermittlungsvorrichtung, und/oder das Zielfernrohr an einem Windmesstraggestell, insbesondere einem Windmessgerät, angebracht wird bzw. werden.

Der mindestens eine GNSS-Empfänger, vorzugsweise die mindestens zwei GNSS-Empfänger, insbesondere die Positionsermittlungsvorrichtung, und/oder das Zielfernrohr können alternativ oder zusätzlich zu einer Anbringung an der Gondel der Windenergieanlage an einem Windmesstraggestell, insbesondere einem Windmessgerät, angebracht sein. Ein Windmessgerät ist in der Regel an der Gondel der Windenergieanlage, beispielsweise an einem Windmesstraggestell, angeordnet. Das Anbringen an einer Gondel der Windenergieanlage umfasst das Anbringen an einem Windmesstraggestell. Das Anbringen an einer Gondel der Windenergieanlage umfasst somit auch das Anbringen an einem Windmessgerät, welches in der Regel an einem Windmesstraggestell an der Gondel angeordnet ist. Das Windmessgerät kann beispielsweise ein Anemometer zur Bestimmung der Windgeschwindigkeit oder ein Anemoskop oder Windrichtungsgeber zur Bestimmung der Windrichtung sein. Vorzugsweise kommen insbesondere Ultraschall-Anemoskope und/oder Ultraschall-Anemometer zum Einsatz.

Nach einer bevorzugten Fortbildungsform des Verfahrens ist vorgesehen, dass der mindestens eine GNSS-Empfänger, vorzugsweise die mindestens zwei GNSS-Empfänger, insbesondere die Positionsermittlungsvorrichtung, und/oder das Zielfernrohr an dem Windmesstraggestell, insbesondere dem Windmessgerät, mittels einer Halterung angebracht wird bzw. werden. Ferner ist bevorzugt, dass die Halterung ausgebildet ist, eine Ausrichtevorrichtung, insbesondere ein Lasergerät, für die Ausrichtung des Windmessgeräts lösbar aufzunehmen.

Die Ausrichtevorrichtung kann beispielsweise ein Lasergerät sein. Beispielsweise kann es vorgesehen sein, dass die Ausrichtung des Windmessgeräts relativ zur Gondel mittels einer Ausrichtevorrichtung erfolgt, die an dem Windmessgerät lösbar mittels einer Halterung befestigt wird. Besonders vorteilhaft ist es daher, wenn dieselbe oder die gleiche Halterung genutzt werden kann, um den mindestens einen GNSS-Empfänger, vorzugsweise die mindestens zwei GNSS-Empfänger, insbesondere die Positionsermittlungsvorrichtung, und/oder das Zielfernrohr an dem Windmessgerät, vorzugsweise ebenfalls lösbar, anzubringen. Auf diese Weise kann zum einen die Halterung wiederverwendet werden, zum anderen kann eine einfache und das Windmessgerät schonende Anbringung mit dieser Halterung gewählt werden.

Gemäß einer besonders vorteilhaften Ausbildungsform ist bevorzugt, dass der mindestens eine GNSS-Empfänger, vorzugsweise die mindestens zwei GNSS-Empfänger, insbesondere die Positionsermittlungsvorrichtung, und/oder das Zielfernrohr nach dem Bestimmen des Azimutwinkels demontiert wird bzw. werden.

In dieser Fortbildungsform ist vorgesehen, dass der mindestens eine GNSS-Empfänger, vorzugsweise die mindestens zwei GNSS-Empfänger, insbesondere die Positionsermittlungsvorrichtung, und/oder das Zielfernrohr nur temporär und/oder lösbar an der Gondel, insbesondere an dem Windmessgerät, montiert werden. Dies hat mehrere Vorteile. Zum einen ist dies eine besonders kostengünstige Variante, da die mindestens zwei GNSS-Empfänger, insbesondere die Positionsermittlungsvorrichtung, und/oder das Zielfernrohr für eine Vielzahl von Windenergieanlagen verwendet werden können, deren Azimutwinkel nacheinander bestimmt beziehungsweise ermittelt werden und die somit nicht über die Lebensdauer einer Windenergieanlage auf dieser verbleiben müssen. Auch wenn während der Lebensdauer einer Windenergieanlage eine Überprüfung und/oder Korrektur des Azimutwinkels erforderlich sein sollte, kann bzw. können für diese Überprüfung beziehungsweise Korrektur die mindestens zwei GNSS-Empfänger, insbesondere die Positionsermittlungsvorrichtung, und/oder das Zielfernrohr (wieder) an der Gondel, insbesondere dem Windmessgerät, angebracht werden und die (erneute) Ermittlung des Azimutwinkels durchgeführt werden. Ferner ist in der Regel die Bestimmung des Azimutwinkels für die Windrichtungskorrekturfunktion nur für einen Prototypen und/oder eine kleine Anzahl von einzelnen Windenergieanlagen einer Windenergieanlagenserie erforderlich und nicht für die gesamte Serie.

Alternativ kann auch eine permanente und/oder nicht lösbare Montage des mindestens einen GNSS-Empfängers, vorzugsweise der mindestens zwei GNSS-Empfänger, insbesondere der Positionsermittlungsvorrichtung, und/oder des Zielfernrohrs an der Gondel, insbesondere an dem Windmessgerät, vorgesehen sein.

Gemäß einem weiteren Aspekt wird die eingangs genannte Aufgabe gelöst durch eine Windenergieanlage nach Anspruch 11.

Die erfindungsgemäße Windenergieanlage und ihre möglichen Fortbildungen weisen Merkmale auf, die sie insbesondere dafür geeignet machen, ein erfindungsgemäßes zuvor beschriebenes Verfahren gemäß der verschiedenen Aspekte und ihrer verschiedenen Fortbildungen durchzuführen.

Zu den Vorteilen, Ausführungsvarianten und Ausführungsdetails der Windenergieanlage und ihrer möglichen Fortbildungen wird auf die vorangegangene Beschreibung zu den entsprechenden Verfahrensmerkmalen verwiesen.

Gemäß einem weiteren Aspekt wird die eingangs genannte Aufgabe gelöst durch die Verwendung von mindestens einem, vorzugsweise mindestens zwei GNSS-Empfängern, insbesondere von einer Positionsermittlungsvorrichtung, und/oder von einem Zielfernrohr auf einer Windenergieanlage zur Ermittlung eines Azimutwinkels durch lösbare Anordnung an einem Windmesstraggestell, insbesondere einem Windmessgerät, mittels einer Halterung.

Zu den Vorteilen, Ausführungsvarianten und Ausführungsdetails dieses weiteren Aspekts und seiner möglichen Fortbildungen wird ebenfalls auf die vorangegangene Beschreibung zu den entsprechenden Verfahrensmerkmalen verwiesen.

Bevorzugte Ausführungsformen der Erfindung werden beispielhaft anhand der beiliegenden Figuren beschrieben. Es zeigen:
- Figur 1:: eine beispielhafte Ausführungsform einer erfindungsgemäßen Windenergieanlage;
- Figur 2:: eine beispielhafte Ausführungsform eines erfindungsgemäßen Verfahrens;
- Figur 3a:: eine weitere beispielhafte Ausführungsform eines erfindungsgemäßen Verfahrens;
- Figur 3b:: eine dritte beispielhafte Ausführungsform eines erfindungsgemäßen Verfahrens;
- Figur 4:: eine schematische Darstellung einer Gondel einer Windenergieanlage mit einer daran angebrachten Positionsermittlungsvorrichtung;
- Figur 5:: eine Draufsicht einer ersten beispielhaften Ausführungsform einer Positionsermittlungsvorrichtung;
- Figur 6:: eine Seitenansicht einer zweiten beispielhaften Ausführungsform einer Positionsermittlungsvorrichtung;
- Figur 7:: eine dreidimensionale Ansicht eines Ultraschall-Windmessgeräts;
- Figur 8:: eine dreidimensionale Ansicht einer Halterung zur Verwendung mit einem Windmessgerät, insbesondere mit einem Windmessgerät gemäß Figur 7;
- Figur 9:: eine schematische Darstellung des Peilvorgangs gemäß dem Verfahren nach Figur 3,
- Figur 10:: eine weitere schematische Darstellung eines Peilvorgangs, und
- Figur 11:: eine dreidimensionale Ansicht eines Windmesstraggestells mit einem daran angeordneten Ultraschall-Windmessgerät sowie einer daran angeordneten Halterung mit Ausrichtevorrichtung, und
- Figur 12:: eine dreidimensionale Ansicht einer weiteren Ausführungsform eines Windmesstraggestells mit einem daran angeordneten Ultraschall-Windmessgerät.

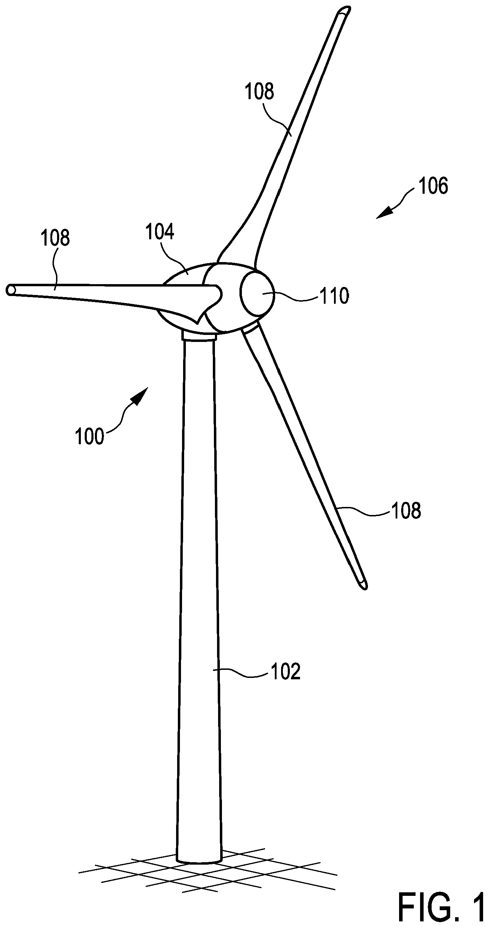

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

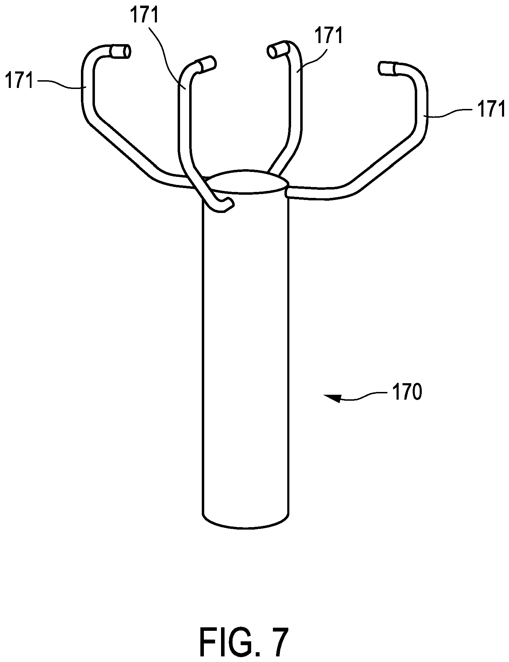

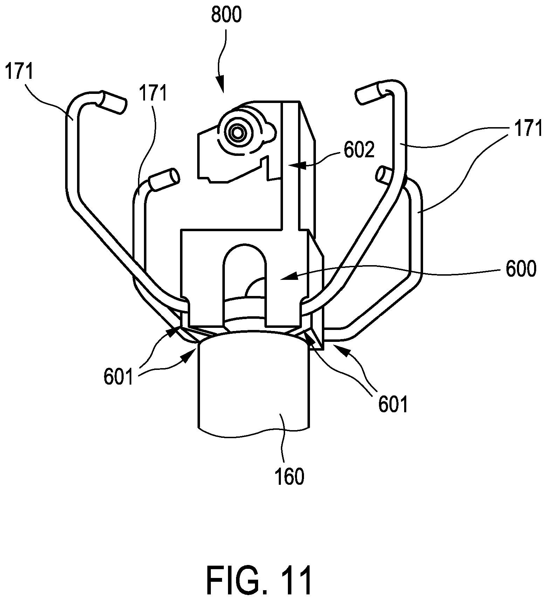

Als Azimutwinkel oder Blickrichtung der Windenergieanlage 100 wird die Himmelsrichtung bezeichnet, in die der Spinner 110 ausgerichtet ist. Damit die Gondel 104 und mit ihr der Rotor 106 möglichst immer in Windrichtung ausgerichtet sind, der Spinner 110 und damit die Anlagenblickrichtung also direkt in den Wind zeigen, ist an der Gondel 104 üblicherweise ein Windmesstraggestell 160 (siehe Figur 11) angeordnet, an dem ein Ultraschall-Windmessgerät 170 (siehe Figuren 7 und 11), das hier als kombiniertes Anemometer und Anemoskop ausgebildet ist, mit vier Armen 171 angeordnet ist.

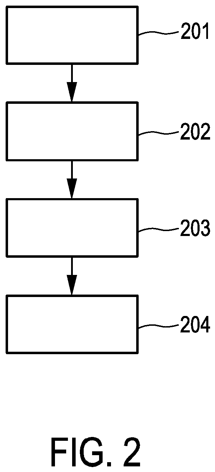

Um die Genauigkeit bei der Bestimmung des Azimutwinkels zu erhöhen, welcher sowohl für die Ermittlung der Windrichtungskorrekturfunktion als auch für die sektorielle Abregelung der Windenergieanlage 100 von Bedeutung ist, sind beispielsweise die Verfahren nach den Figuren 2 und/oder 3 bevorzugt.

Gemäß Figur 2 umfasst ein beispielhaftes Verfahren zum Bestimmen eines Azimutwinkels einer Windenergieanlage den Schritt 201 Anbringen von mindestens zwei GNSS-Empfängern an einer Gondel der Windenergieanlage, den Schritt 202 Vergleichen der Empfangssignale der GNSS-Empfänger, den Schritt 203 Ableiten des Azimutwinkels aus dem Vergleichsergebnis sowie den vorzugsweise optionalen Schritt 204 Demontieren der mindestens zwei GNSS-Empfänger nach dem Bestimmen des Azimutwinkels.

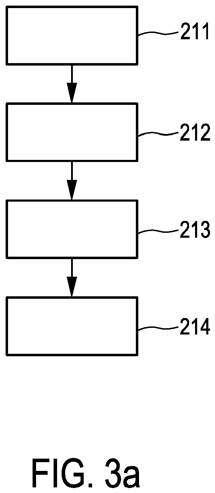

Gemäß Figur 3a umfasst ein beispielhaftes Verfahren zum Bestimmen eines Azimutwinkels einer Windenergieanlage den Schritt 211 Anbringen eines Zielfernrohrs an einer Gondel der Windenergieanlage, den Schritt 212 Anpeilen eines Peilobjekts mit dem Zielfernrohr in einem Peilwinkel, den Schritt 213 Ableiten des Azimutwinkels aus einem Abgleich des Peilwinkels mit realen Koordinaten des Peilobjekts und/oder der Windenergieanlage, insbesondere des Zielfernrohrs sowie den vorzugsweise optionalen Schritt 214 Demontieren des Zielfernrohrs nach dem Bestimmen des Azimutwinkels.

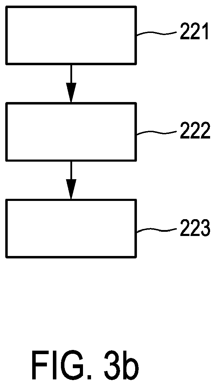

Gemäß Figur 3b umfasst ein beispielhaftes Verfahren zum Bestimmen eines Azimutwinkels einer Windenergieanlage den Schritt 221 Anbringen von einem GNSS-Empfänger an einer Gondel der Windenergieanlage, 222 Drehen der Gondel der Windenergieanlage um ihre eigene Achse und Vergleichen der Empfangssignale des GNSS-Empfängers von unterschiedlichen Positionen der Drehung, und 223 Ableiten des Azimutwinkels aus dem Vergleichsergebnis, wobei vorzugsweise der GNSS-Empfänger außerhalb des Drehpunktes der Gondel auf einer im Wesentlichen horizontalen Längsachse der Gondel angebracht ist und das Ableiten des Azimutwinkels das Ausrichten der Gondel nach der nördlichsten Koordinate derjenigen Koordinaten umfasst, die aus den der während der Drehung empfangenen Empfangssignalen des GNSS-Empfängers ermittelt wurden.

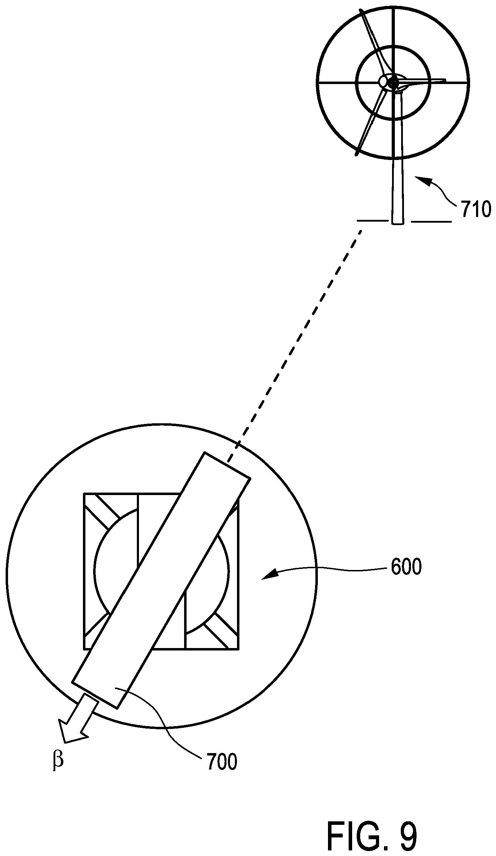

Figur 9 illustriert den in Figur 3 mit 212 bezeichneten Schritt des Anpeilens näher. In Figur 9 ist schematisch dargestellt, dass an einer unten näher beschriebenen Halterung 600 ein Zielfernrohr 700 lösbar angeordnet ist, mit welchem ein entfernt positioniertes Peilobjekt, hier eine andere Windenergieanlage 710, angepeilt wird unter einem Peilwinkel a.

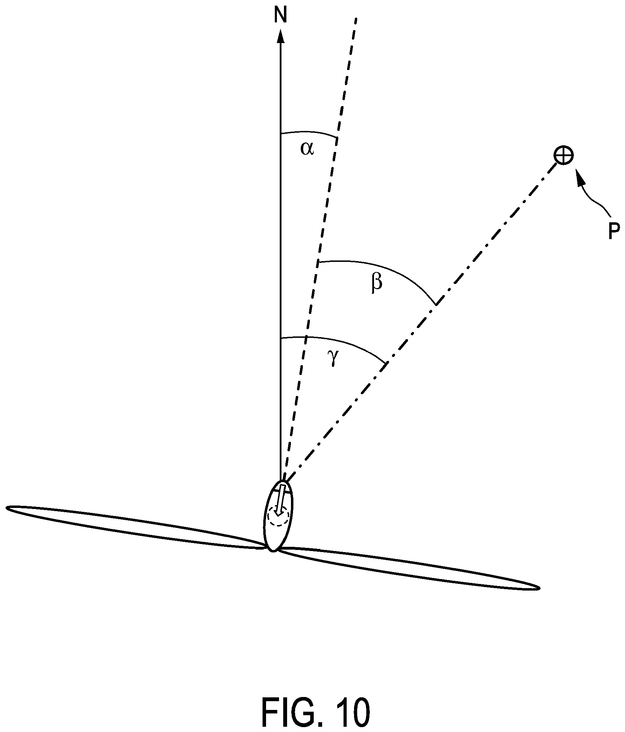

Figur 10 den Peilvorgang von einer Windenergieanlage 100 zu einem Peilobjekt P. Das Zielfernrohr ist in Figur 10 nicht dargestellt. Der Winkel zwischen der Anlagenorientierung und der Verlängerung Zielfernrohr-Peilobjekt ist der Peilwinkel ß. Aus diesem Peilwinkel β und den realen Koordinaten des Peilobjekts sowie den realen Koordinaten der Windenergieanlage, also dem Standort der Windenergieanlage, insbesondere den realen Koordinaten des Zielfernrohrs, lässt sich der Azimutwinkel der Windenergieanlage ableiten.

Wenn das Verfahren zur Korrektur eines Azimutwinkels einer Windenergieanlage eingesetzt werden soll, kann der Schritt des Ableitens des Azimutwinkels auch wie folgt durchgeführt und/oder modifiziert werden. Der Peilwinkel ß kann zum bestehenden, zu korrigierenden Azimutwinkel α der Anlage addiert beziehungsweise subtrahiert werden und der sich daraus ergebende Winkel wird als Winkel A bezeichnet. Der sich aus den realen Koordinaten des Peilobjekts und der Windenergieanlage beziehungsweise des Zielfernrohrs ergebende beziehungsweise errechnete Winkel zwischen Anlagenorientierung und der Nordachse N wird als Winkel B (γ) bezeichnet. Aus der Differenz dieser beiden Winkel A und B ergibt sich ein sogenannter Offset des Azimutwinkels der Windenergieanlage, um den der bestehende Azimutwinkel der Windenergieanlage zu korrigieren ist.

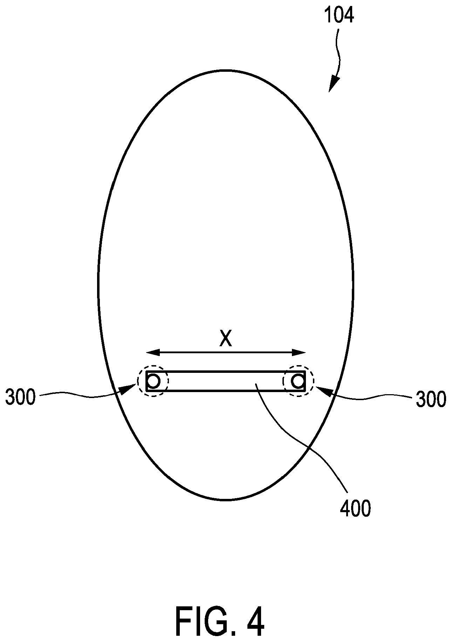

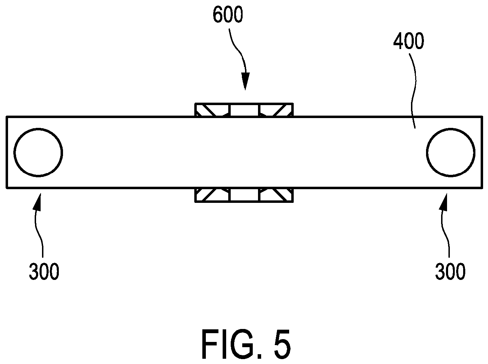

Wie in Figur 4 zu erkennen ist, können die mindestens zwei GNSS-Empfänger 300 Teil einer an der Gondel 104 angebrachten, als Balken 400 ausgebildeten Positionsermittlungsvorrichtung sein. Der mit X bezeichnete Abstand zwischen den beiden GNSS-Empfängern 300 beträgt vorzugsweise circa zwei Meter. Wie in den Figuren 4 und 5 dargestellt, kann die Positionsermittlungsvorrichtung als einfacher Balken 400 ausgebildet sein, an dessen jeweiligen Enden die mindestens zwei GNSS-Empfängern 300 angeordnet sind. Die Positionsermittlungsvorrichtung ist vorzugsweise als teleskopierbarer Balken ausgebildet. In Figur 5 ist ferner zu erkennen, dass die Positionsermittlungsvorrichtung 400 an einer unten näher beschriebenen Halterung 600 lösbar befestigt ist.

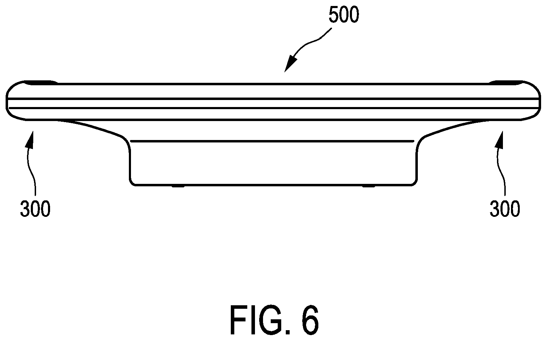

In Figur 6 ist dargestellt, dass die beiden GNSS-Empfänger 300 auch als Teil einer als GNSS-Kompass 500 oder Satelliten-Kompass ausgebildeten Positionsermittlungsvorrichtung ausgebildet sein können. Ein solcher GNSS-Kompass 500 kann ebenfalls an der Gondel oder einem Windmesstraggestell der Windenergieanlage angebracht werden. Vorzugsweise sind die beiden GNSS-Empfänger ebenfalls an möglichst weit voneinander beabstandeten Enden des GNSS-Kompass 500 angeordnet.

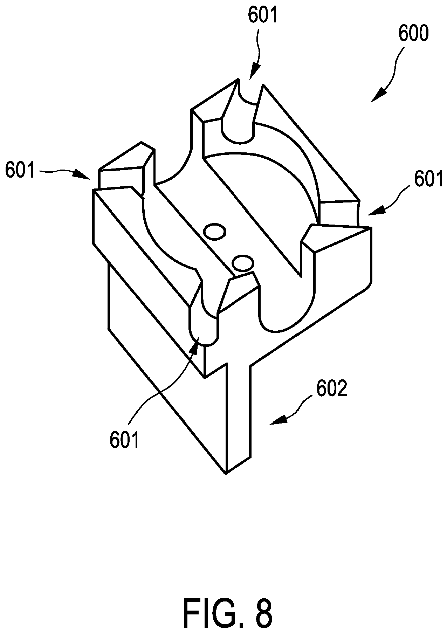

Wie in Figur 11 zu erkennen ist, kann auf dem am Windmesstraggestell 160 angebrachten Windmessgerät 170 eine auch nochmals in Figur 8 dargestellte Halterung 600 angebracht werden. Die Halterung 600 weist an ihrer Unterseite vier Ausnehmungen 601 auf, in die die vier Arme 171 des Windmessgeräts 170 eingreifen können. Ferner weist die Halterung 600 eine auskragende Halteplatte 602 auf, an der eine Ausrichtevorrichtung lösbar angeordnet werden kann. Wie in Figur 11 dargestellt, kann beispielsweise ein Lasergerät 800 lösbar an der auskragenden Halteplatte 602 befestigt werden. Die Ausrichtevorrichtung in Form eines Lasergeräts 800 kann beispielsweise dazu verwendet werden, das Windmessgerät 170 auf den Windmesstraggestell 160 exakt in Anlagenblickrichtung auszurichten. Die Halterung 600, insbesondere die auskragende Halteplatte 602, kann nach der Demontage der Ausrichtevorrichtung auch dazu verwendet werden, die mindestens zwei GNSS-Empfänger, insbesondere die Positionsermittlungsvorrichtung, und/oder das Zielfernrohr an dem Windmessgerät, wie beispielsweise dem Windmessgerät 170 beziehungsweise dem Windmesstraggestell 160 zu befestigen.

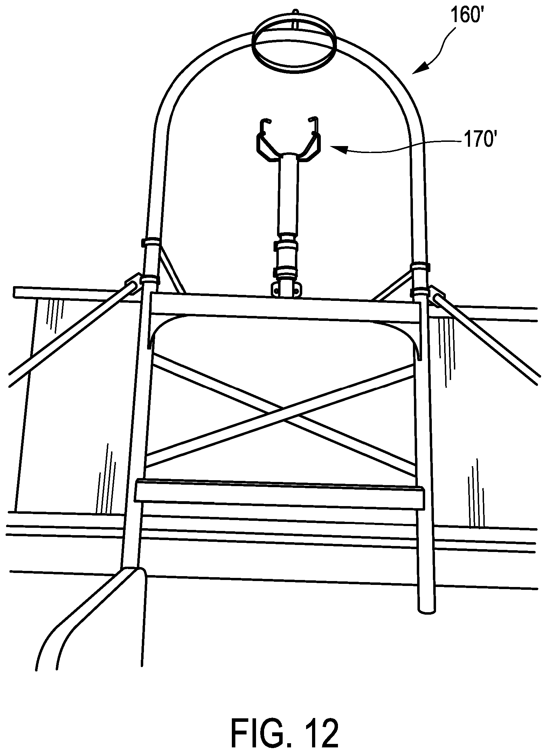

In Figur 12 ist eine weitere Ausführungsform eines Windmesstraggestells 160' mit einem daran angeordneten Ultraschall-Windmessgerät 170' dargestellt.

Der erfinderische Gedanke, die Ermittlung des Azimutwinkels auf die Windenergieanlage 100 selbst zu verlegen, und dadurch die Genauigkeit bei der Bestimmung des Azimutwinkels gegenüber herkömmlichen Verfahren, bei denen der Azimutwinkel einer Windenergieanlage durch Anpeilen aus der Ferne bestimmt wird, deutlich zu erhöhen, bringt somit verschiedene Vorteile mit sich. Zum einen kann die Windausbeute erhöht werden über eine Optimierung der Windrichtungskorrekturfunktion. Zum anderen kann über die sektorielle Abregelung der Windenergieanlage die Lärmbelastung und vor allem die Turbulenzbelastung und damit die Materialbelastung der Anlagen reduziert werden und in Windparks ebenfalls die Windausbeute erhöht werden. Durch die Lösbarkeit und Wiederverwendbarkeit der für die Bestimmung des Azimutwinkels eingesetzten Elemente kann das Verfahren ferner effizient und kostengünstig durchgeführt werden.

## Patentansprüche

1. Verfahren zum Bestimmen eines Azimutwinkels einer Windenergieanlage (100) umfassend ein Windmessgerät, mit den Schritten
- Anbringen von mindestens zwei GNSS-Empfängern (300) an einer Gondel (104) der Windenergieanlage,
- Vergleichen der Empfangssignale der GNSS-Empfänger (300),
- Ableiten des Azimutwinkels aus dem Vergleichsergebnis;
- **dadurch gekennzeichnet, dass** die mindestens zwei GNSS-Empfänger (300) an einem Windmesstraggestell oder dem Windmessgerät (170), mittels einer Halterung angebracht werden, und
- die Halterung ausgebildet ist, eine Ausrichtevorrichtung für die Ausrichtung des Windmessgeräts (170) lösbar aufzunehmen.

2. Verfahren nach dem vorhergehenden Anspruch, **dadurch gekennzeichnet, dass** die Ausrichtevorrichtung ein Lasergerät ist.

3. Verfahren nach mindestens einem der vorhergehenden Ansprüche, **dadurch gekennzeichnet, dass** die mindestens zwei GNSS-Empfänger (300) nach dem Bestimmen des Azimutwinkels demontiert werden.

4. Verfahren nach mindestens einem der vorhergehenden Ansprüche, **dadurch gekennzeichnet, dass** die mindestens zwei GNSS-Empfänger (300) Teil einer an der Gondel (104) angebrachten Positionsermittlungsvorrichtung (400, 500), insbesondere eines GNSS-Kompass, sind.

5. Verfahren nach dem Anspruch 4, **dadurch gekennzeichnet, dass** das Vergleichen der Empfangssignale der GNSS-Empfänger (300) in der Positionsermittlungsvorrichtung (400, 500), insbesondere im GNSS-Kompass, ausgeführt wird.

6. Verfahren nach mindestens einem der Ansprüche 4-5, **dadurch gekennzeichnet, dass** das Ableiten des Azimutwinkels in der Positionsermittlungsvorrichtung (400, 500), insbesondere im GNSS-Kompass, ausgeführt wird.

7. Verfahren zum Bestimmen eines Azimutwinkels einer Windenergieanlage (100) umfassend ein Windmessgerät, mit den Schritten
- Anbringen von einem GNSS-Empfänger (300) an einer Gondel (104) der Windenergieanlage,
- Drehen der Gondel der Windenergieanlage um ihre eigene Achse und Vergleichen der Empfangssignale des GNSS-Empfängers (300) von unterschiedlichen Positionen der Drehung,
- Ableiten des Azimutwinkels aus dem Vergleichsergebnis,
- **dadurch gekennzeichnet, dass** der GNSS-Empfänger (300) an einem Windmesstraggestell oder dem Windmessgerät (170), mittels einer Halterung angebracht wird, und
- die Halterung ausgebildet ist, eine Ausrichtevorrichtung für die Ausrichtung des Windmessgeräts (170) lösbar aufzunehmen.

8. Verfahren nach dem vorhergehenden Anspruch, **dadurch gekennzeichnet, dass** der GNSS-Empfänger (300) außerhalb des Drehpunktes der Gondel (104) auf einer im Wesentlichen horizontalen Längsachse der Gondel angebracht ist und das Ableiten des Azimutwinkels das Ausrichten der Gondel nach der nördlichsten Koordinate derjenigen Koordinaten umfasst, die aus den der während der Drehung empfangenen Empfangssignalen des GNSS-Empfängers (300) ermittelt wurden.

9. Verfahren nach einem der vorhergehenden Ansprüche 7-8, **dadurch gekennzeichnet, dass** die Ausrichtevorrichtung ein Lasergerät ist.

10. Verfahren nach mindestens einem der vorhergehenden Ansprüche 7-9, **dadurch gekennzeichnet, dass** der GNSS-Empfänger (300) nach dem Bestimmen des Azimutwinkels demontiert wird.

11. Windenergieanlage (100) mit einem Turm, einer Gondel (104) und einem Rotor (106) und einem Windmessgerät, **dadurch gekennzeichnet, dass** an der Gondel (104), nämlich an einem Windmesstraggestell oder dem Windmessgerät (170), mindestens ein GNSS-Empfänger (300), vorzugsweise mindestens zwei GNSS-Empfänger (300), insbesondere eine Positionsermittlungsvorrichtung (400, 500), zur Ermittlung des Azimutwinkels der Windenergieanlage mittels einer Halterung, die ausgebildet ist, eine Ausrichtevorrichtung für die Ausrichtung des Windmessgeräts (170) lösbar aufzunehmen, angeordnet ist bzw. sind.

12. Verwendung von mindestens einem GNSS-Empfänger (300), vorzugsweise von mindestens zwei GNSS-Empfängern (300), insbesondere von einer Positionsermittlungsvorrichtung (400, 500), auf einer Windenergieanlage (100) umfassend ein Windmessgerät zur Ermittlung eines Azimutwinkels der Windenergieanlage durch Anordnung an einem Windmesstraggestell oder dem Windmessgerät (170), mittels einer Halterung, die ausgebildet ist, eine Ausrichtevorrichtung für die Ausrichtung des Windmessgeräts (170) lösbar aufzunehmen.

## Claims

1. A method for determining an azimuth angle of a wind power installation (100) comprising a wind measuring device, with the steps of
- attaching at least two GNSS receivers (300) on a nacelle (104) of the wind power installation,
- comparing the reception signals of the GNSS receivers (300),
- deriving the azimuth angle from the comparison result;
- **characterized in that** the at least two GNSS receivers (300) are attached to a wind measuring supporting frame or the wind measuring device (170), by means of a holder, and
- the holder is configured to releasably accommodate an orienting apparatus for the orientation of the wind measuring device (170).

2. The method as claimed in the preceding claim, **characterized in that** the orienting apparatus is a laser device.

3. The method as claimed in at least one of the preceding claims, **characterized in that** the at least two GNSS receivers (300) are demounted after the determination of the azimuth angle.

4. The method as claimed in at least one of the preceding claims, **characterized in that** the at least two GNSS receivers (300) are part of a position determination apparatus (400, 500), in particular of a GNSS compass, attached to the nacelle (104).

5. The method as claimed in claim 4, **characterized in that** the comparison of the reception signals of the GNSS receivers (300) is carried out in the position determination apparatus (400, 500), in particular in the GNSS compass.

6. The method as claimed in at least one of the claims 4-5, **characterized in that** the derivation of the azimuth angle is carried out in the position determination apparatus (400, 500), in particular in the GNSS compass.

7. A method for determining an azimuth angle of a wind power installation (100) comprising a wind measuring device, with the steps of
- attaching a GNSS receiver (300) on a nacelle (104) of the wind power installation,
- rotating the nacelle of the wind power installation about its own axis and comparing the reception signals of the GNSS receiver (300) from different positions of the rotation,
- deriving the azimuth angle from the comparison result,
- **characterized in that** the GNSS receiver (300) is attached to a wind measuring supporting frame or the wind measuring device (170), by means of a holder, and
- the holder is configured to releasably accommodate an orienting apparatus for the orientation of the wind measuring device (170).

8. The method as claimed in the preceding claim, **characterized in that** the GNSS receiver (300) is attached outside the pivot point of the nacelle (104) on a substantially horizontal longitudinal axis of the nacelle and the derivation of the azimuth angle comprises the orientation of the nacelle according to the northernmost coordinate of those coordinates, which have been determined from the reception signals of the GNSS receiver (300) received during the rotation.

9. The method as claimed in one of the preceding claims 7-8, **characterized in that** the orienting apparatus is a laser device.

10. The method as claimed in at least one of the preceding claims 7-9, **characterized in that** the GNSS receiver (300) is demounted after the determination of the azimuth angle.

11. A wind power installation (100) having a tower, a nacelle (104) and a rotor (106), and a wind measuring device, **characterized in that** at least one GNSS receiver (300), preferably at least two GNSS receivers (300), in particular a position determination apparatus (400, 500), is/are arranged on the nacelle (104), namely on a wind measuring supporting frame or the wind measuring device (170), for determining of the azimuth angle of the wind power installation, by means of a holder, wherein the holder is configured to releasably accommodate an orienting apparatus for the orientation of the wind measuring device (170).

12. The use of at least one GNSS receiver (300), preferably at least two GNSS receivers (300), in particular a position determination apparatus (400, 500), on a wind power installation (100) comprising a wind measuring device for determining an azimuth angle of the wind power installation by arrangement on a wind measuring supporting frame or the wind measuring device (170), by means of a holder, wherein the holder is configured to releasably accommodate an orienting apparatus for the orientation of the wind measuring device (170).

## Revendications

1. Procédé de détermination d'un angle azimutal d'une éolienne (100) comprenant un appareil de mesure du vent, avec les étapes
- d'installation d'au moins deux récepteurs GNSS (300) sur une nacelle (104) de l'éolienne,
- de comparaison des signaux de réception des récepteurs GNSS (300),
- de déduction de l'angle azimutal du résultat de la comparaison ;
- **caractérisé en ce que** les au moins deux récepteurs GNSS (300) sont installés sur un châssis de support de mesure de vent ou sur l'appareil de mesure du vent (170) au moyen d'un support, et
- le support est réalisé pour recevoir de manière amovible un dispositif d'orientation pour l'orientation de l'appareil de mesure du vent (170).

2. Procédé selon la revendication précédente, **caractérisé en ce que** le dispositif d'orientation est un appareil laser.

3. Procédé selon au moins l'une quelconque des revendications précédentes, **caractérisé en ce que** les au moins deux récepteurs GNSS (300) sont démontés après la détermination de l'angle azimutal.

4. Procédé selon au moins l'une quelconque des revendications précédentes, **caractérisé en ce que** les au moins deux récepteurs GNSS (300) font partie d'un dispositif de détermination de position (400, 500) installé sur la nacelle (104), en particulier d'un compas GNSS.

5. Procédé selon la revendication 4,
**caractérisé en ce que** la comparaison des signaux de réception des récepteurs GNSS (300) est réalisée dans le dispositif de détermination de position (400, 500), en particulier dans le compas GNSS.

6. Procédé selon au moins l'une quelconque des revendications 4 à 5, **caractérisé en ce que** la déduction de l'angle azimutal est réalisée dans le dispositif de détermination de position (400, 500), en particulier dans le compas GNSS.

7. Procédé pour définir un angle azimutal d'une éolienne (100) comprenant un appareil de mesure du vent, avec les étapes
- d'installation d'un récepteur GNSS (300) sur une nacelle (104) de l'éolienne,
- de rotation de la nacelle de l'éolienne autour de son propre axe et de comparaison des signaux de réception du récepteur GNSS (300) de différentes positions de la rotation
- de déduction de l'angle azimutal du résultat de la comparaison,
- **caractérisé en ce que** le récepteur GNSS (300) est installé sur un châssis porteur de mesure de vent ou sur l'appareil de mesure du vent (170) au moyen d'un support, et
- le support est réalisé pour loger de manière amovible un dispositif d'orientation pour l'orientation de l'appareil de mesure du vent (170).

8. Procédé selon la revendication précédente, **caractérisé en ce que** le récepteur GNSS (300) est installé à l'extérieur du point de rotation de la nacelle (104) sur un axe longitudinal sensiblement horizontal de la nacelle et la déduction de l'angle azimutal comprend l'orientation de la nacelle selon les coordonnées les plus au nord desdites coordonnées, qui précisément ont été déterminées à partir des signaux de réception, reçus pendant la rotation, du récepteur GNSS (300).

9. Procédé selon l'une quelconque des revendications 7 à 8, **caractérisé en ce que** le dispositif d'orientation est un appareil laser.

10. Procédé selon au moins l'une quelconque des revendications 7 à 9, **caractérisé en ce que** le récepteur GNSS (300) est démonté après la définition de l'angle azimutal.

11. Eolienne (100) avec une tour, une nacelle (104) et un rotor (106) et un appareil de mesure du vent, **caractérisée en ce qu'**est disposé ou sont disposés, sur la nacelle (104), à savoir sur un châssis porteur de mesure du vent ou l'appareil de mesure du vent (170), au moins un récepteur GNSS (300), de préférence au moins deux récepteurs GNSS (300), en particulier un dispositif de détermination de position (400, 500) pour déterminer l'angle azimutal de l'éolienne au moyen d'un support qui est réalisé pour loger de manière amovible un dispositif d'orientation pour l'orientation de l'appareil de mesure du vent (170).

12. Utilisation d'au moins un récepteur GNSS (300), de préférence d'au moins deux récepteurs GNSS (300), en particulier d'un dispositif de détermination de position (400, 500), sur une éolienne (100) comprenant un appareil de mesure du vent pour déterminer un angle azimutal de l'éolienne par l'agencement sur un châssis porteur de mesure du vent ou l'appareil de mesure du vent (170) au moyen d'un support qui est réalisé pour loger de manière amovible un dispositif d'orientation pour l'orientation de l'appareil de mesure du vent (170).
